# EUROPÄISCHE PATENTANMELDUNG

(11) **EP 1 384 975 A2**
(43) Veröffentlichungstag der Anmeldung: **28.01.2004**
(21) Anmeldenummer: 03010524.1
(22) Anmeldetag: 10.05.2003
(51) Int. Cl.: G01D 4/00

(54) **Zähleranordnung für die Verbrauchsmessung**

(30) Priorität: 24.07.2002 DE 10233721
(71) Anmelder: ITF Fröschl GmbH, 93194 Walderbach (DE)
(72) Erfinder: Zintl, Peter, 93092 Freisheim/Barbing (DE)
(74) Vertreter: Graf, Helmut, Dipl.-Ing.

(57) **Zusammenfassung**

Die Erfindung bezieht sich auf eine neuartige Zähleranordnung zur Verbrauchsmessung, mit einem Verbrauchszähler mit Zählergehäuse, in dessen Innenraum zumindest eine Meßeinrichtung sowie Mittel zur Speicherung von Verbrauchswerten untergebracht sind, sowie mit einem Daten- und Informationsträger.

## Beschreibung

Die Erfindung bezieht sich auf eine Zähleranordnung für die Verbrauchsmessung gemäß Oberbegriff Patentanspruch 1.

Unter "Verbrauch" wird im Sinne der Erfindung insbesondere der Verbrauch an elektrischer Energie verstanden, aber auch der Verbrauch an anderen Energie- und Verbrauchsarten, wie Gas, Wasser, Abwasser, Wärme, Prozeßluft usw.

Speziell für die Abrechnung der an Abnehmer bzw. Kunden gelieferten elektrischen Energie (elektrischen Arbeit) werden Elektrizitätszähler verwendet. Die für die Messung relevanten physikalischen Größen, wie Strom, Spannung und Phasenlage werden mit einem Meßwerk erfaßt und die hieraus errechnete elektrische Arbeit wird in Speichermitteln abgespeichert und an einer Anzeige angezeigt. Bei den nach dem "Ferraris-Prinzip" arbeitenden Zählern wird die gelieferte elektrische Arbeit an einem Rollenzählwerk angezeigt, welches die Funktionen Speichermittel und Anzeige beinhaltet. Bei elektronischen Zählern werden beispielsweise elektronisch Meßwerke, Speicher und Anzeigen verwendet. Je nach Vertragsart hat der Kunde einen Zähler mit einem oder mehreren Zähl- oder Meßwerken, beispielsweise bei einem Doppeltarif ein Zählwerk für den Hochtarif und ein Zählwerk für den Niedertarif. Der Verbrauch innerhalb einer Abrechnungsperiode wird aus der Differenz des abgelesenen Zählerstandes am Ende der Abrechnungsperiode zum Zählerstand am Ende der letzten Ablesung berechnet. Die Abrechnungsperiode und damit auch die Ableseperiode beträgt beispielsweise bei Tarifkunden ein Jahr.

Zum Ablesen der Zählerstände sind mehrere Verfahren üblich. Ein Verfahren besteht darin, daß dem jeweiligen Vertragskunden eine Ablesekarte zugesandt wird. Der Kunde überträgt dann den aktuellen Zählerstand oder die aktuellen Zählerstände auf die Ablesekarte und schickt die so ausgefüllte Karte an eine Abrechnungsstelle oder an ein Abrechnungssystem zurück, und zwar beispielsweise auf dem üblichen Postweg.

Bei diesem Verfahren sind Fehler nicht auszuschließen, und zwar einerseits durch nicht korrekt ausgefüllte Ablesekarten, durch Ablesefehler des Kunden, durch unleserliche Schrift usw. Dies führt auch dazu, daß in sehr vielen Fällen eine Nachablesung, manuelle Nachbearbeitung oder Klärung erforderlich ist, was einen zusätzlichen Aufwand an Zeit und Kosten bedeutet.

Ein weiteres Verfahren besteht darin, daß das Ablesen der Zähler durch eingewiesenes Ablesepersonal erfolgt. Hierbei werden dann zunehmend mobile Datenerfassungsgeräte verwendet, in die der jeweilige Zählerstand gegebenenfalls mit weiteren, relevanten Daten eingegeben werden. Dieses Ableseverfahren bedeutet allerdings hohe Personal- und Investitionskosten.

Üblicherweise sind Zähler und dabei insbesondere auch Elektrizitätszähler mit Datenschildern versehen, auf denen Kennwerte des Zählers, wie z. B. Zählernummer, Zählertyp, Nennspannung und Nennstrom usw. vermerkt sind. Diese Kenndaten werden z. B. bei der Prüfung der Zähler benötigt, um nach dem Anbringen des jeweiligen Zählers auf einer Prüfvorrichtung eine entsprechende Prüfung vornehmen und auch ein Prüfprotokoll erstellen zu können. Weiterhin werden diese Kenndaten u.a. auch zur Lager- und/oder Bestandsverwaltung bei der Lagerung von Zählern benötigt sowie nach dem Einbau eines Zählers im Netz zur Registrierung des Einbauortes, und zwar z. B. in einem Zählerverwaltungssystem des jeweiligen Versorgungsunternehmens. Das maschinelle Auslesen dieser Zählerkenndaten ist bisher nicht oder nur sehr beschränkt möglich.

Aufgabe der Erfindung ist es, eine Zähleranordnung aufzuzeigen, die die vorgenannten Nachteile vermeidet, insbesondere auch eine vereinfachte und fehlerfreie Ablesung von Verbrauchszählern ermöglicht und/oder ein problemloses Auslesen von Zählerdaten, insbesondere auch Zählerkenndaten. Zur Lösung dieser Aufgabe ist eine Zähleranordnung entsprechend dem Patentanspruch 1 ausgebildet.

Weiterbildungen der Erfindung sind Gegenstand der Unteransprüche.

Als Datenträger wird bei der Erfindung ein nach dem Transponder-Prinzip arbeitender Datenträger verwendet, der im wesentlichen aus einer als Antenne wirkenden Struktur und aus einer Elektronik in Form eines integrierten Schaltkreises besteht, wobei die Elektronik so ausgeführt ist, daß sie die für ihren Betrieb notwendige Versorgungsspannung aus dem über die Antennenstruktur empfangenen HF-Signal (elektromagnetische Wellen) selbst erzeugt und außerdem einen drahtlosen Datentransfer ermöglicht, und zwar vorzugsweise in bidirektionaler Richtung zwischen dem Datenträger und einer Schreib- und Leseeinrichtung. Derartige Daten- oder Informationsträger sind beispielsweise auch als "Smart-Cards" oder RFID-Labels (Radio Frequenz Identification Labels) bekannt.

Die Erfindung wird im Folgenden anhand der Figuren an Ausführungsbeispielen erläutert. Es zeigen:

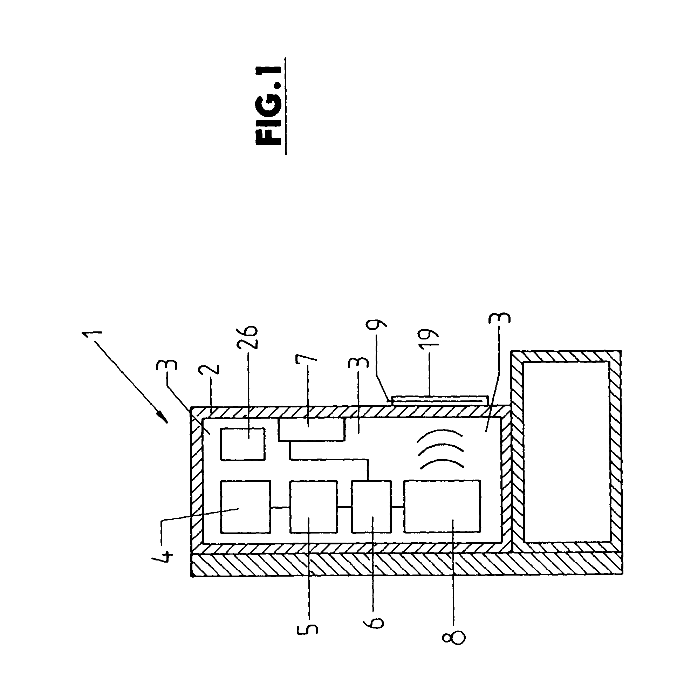

- Fig. 1: in sehr vereinfachter schematischer Darstellung und in Seitenansicht einen Zähler zur Verwendung bei der Erfindung, und zwar zusammen mit einem am Zähler vorgesehenen Daten- und Informationsträger;
- Fig. 2: eine Draufsicht auf einen Daten- und Informationsträger zur Verwendung bei der Erfindung;
- Fig. 3: ein vereinfachtes schematisches Funktions- oder Blockdiagramm des Daten- und Informationsträgers zur Verwendung bei der Erfindung;
- Fig. 4: eine Darstellung zur Erläuterung der Erfindung bei der Übermittlung der Verbrauchswerte und Zählerdaten von einem Verbrauchszähler an ein Abrechnungssystem bzw. an einen dortigen Rechner.

In den Figuren ist 1 ein Verbrauchszähler, der bei der dargestellten Ausführungsform ein elektronischer Elektrizitätszähler ist. Dieser beinhaltet in einem Gehäuse 2 bzw. in einem von diesem Gehäuse umschlossenen plombierten und eichpflichtigen Raum 3 die für derartige Zähler üblichen Komponenten, nämlich u. a. das Meßwerk 4 zum Messen der für den Verbrauch relevanten physikalischen Größen Strom, Spannung und

Phasenlage, eine diese Meßwerte auswertende und verarbeitende Elektronik 5, einen Datenspeicher 6 zum Speichern u. a. der gewonnenen Verbrauchswerte sowie weiterhin Anzeigen, insbesondere auch eine Anzeige 7 zum Anzeigen des jeweiligen Zählerstandes.

In dem Innenraum 3 ist weiterhin eine Schreib- und Leseeinrichtung 8 vorgesehen, über die drahtlos, d. h. über Funk beispielsweise auf einer Frequenz von 13,56 MHz ein bidirektionaler Datenaustausch mit einem nach Art eines Transponders bzw. als RFID-Label (Radio Frequenz Identification Label) ausgebildeten Informations- und Datenträger 9 möglich ist.

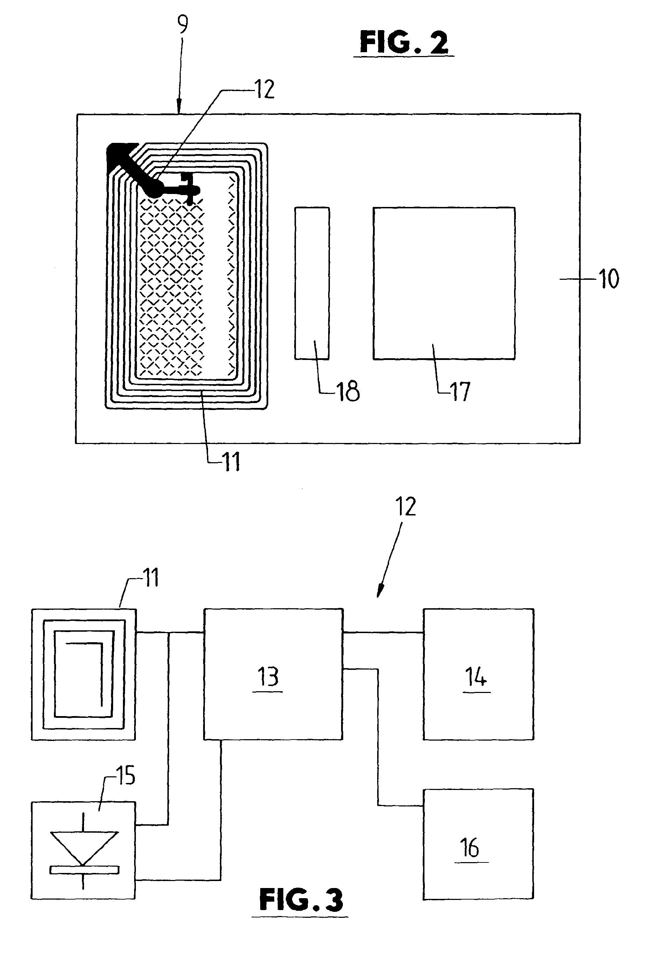

Wie die Figur 2 zeigt, ist dieser Informationsträger 9 etiketten- oder kartenartig ausgebildet und besteht im wesentlichen aus einem von einem beispielsweise mehrschichtigen Flachmaterial gebildeten Träger 10, auf dem eine bei der dargestellten Ausführungsform rechteckförmige Antennenstruktur 11 in Form einer mehrwindigen spiralförmigen Leiterbahn aufgebracht ist. Auf dem Träger 1 bzw. in einer in diesem Träger gebildeten Ausnehmung ist ein Halbleiterchip 12 untergebracht, der entsprechend der Figur 3 u. a. einen Steuerkreis 13, einen nicht flüchtigen Lese- und Schreibspeicher 14 für Daten, eine Spannungsversorgung 15 zur Erzeugung einer Versorgungsspannung aus dem über die Antennenstruktur 11 empfangenen HF-Signal durch Gleichrichten sowie eventuell einen weiteren Speicher 16 in Form eines ROM zur Speicherung von Programmfunktionen aufweist. Der Speicher 16 dient beispielsweise auch zum Abspeichern einer den jeweiligen Daten- und Informationsträger 9 von anderen, gleichartigen Daten- und Informationsträgern unterscheidenden Codierung, die auch bei dem Datentransfer verwendet wird. Selbstverständlich sind auch andere Architekturen für den Halbleiterchip 12 denkbar.

Durch Schutzschichten sind die Antennenstruktur 11 und der Chip 12 an den beiden Oberflächenseiten des kartenartigen Trägers 10 abgedeckt. Der Träger 10 weist beispielsweise das Format einer Postkarte auf und ist bei der dargestellten Ausführungsform mit der Adresse der Abrechnungsstelle sowie mit der Adresse des Vertragskunden als Absender vorgedruckt, wie dies in der Figur 2 mit den Blöcken 17 und 18 angedeutet ist.

An der Außenseite des Gehäuses 2 und durch dieses vollständig von dem Innenraum 3 getrennt ist eine Aufnahme 19 vorgesehen, in der der Daten- und Informationsträger 9 eingesetzt werden kann. Diese Aufnahme 19 ist beispielsweise von einer außen am Gehäuse 2 vorgesehenen seitlich oder oben offenen schlitzförmigen Tasche gebildet, in die der Informations- oder Datenträger zumindest teilweise eingeschoben werden kann, und zwar derart, daß er mit seinen Oberflächenseiten parallel oder in etwa parallel zu der betreffenden Gehäuseseite liegt. Die Aufnahme 19 ist durch die Wandung des Gehäuses 2 vollständig von dem Innenraum 3 getrennt und bei der dargestellten Ausführungsform an der Vorderseite des Gehäuses 2 vorgesehen. Die Aufnahme 19 kann aber auch an jeder anderen, geeigneten Stelle des Gehäuses 2 angebracht sein, beispielsweise an einer der beiden vertikalen Seitenflächen des Zählergehäuses.

Da die Datenübertragung über Funk erfolgt und eine einwandfreie Datenübertragung über eine relativ große Entfernung beispielsweise bis zu 100 cm möglich ist, ist die Anbringung der Aufnahme 19 am Gehäuse 2 des Verbrauchszählers 1 relativ unkritisch.

In durch die Elektronik 5 bzw. durch einen in dieser Elektronik enthaltenen Taktgeber werden in vorgegebenen Zeitintervallen die jeweiligen Zählerdaten und dabei insbesondere die den Verbrauchszähler 1 identifizierenden Kenndaten, wie z. B. Kundennummer, Zählernummer, Zählpunktnummer, Zählertyp, Eigentümer des Zählers usw. sowie die für die Abrechnung relevanten Zählerdaten, insbesondere auch der Zählerstand oder aber bei Sondervertragskunden die Zählerstände in den Informations- und Datenträger 9 bzw. in den dortigen Speicher 14 eingelesen, wobei dort bereits abgespeicherten Daten jeweils aktualisiert bzw. mit den aktuellen Daten überschrieben werden.

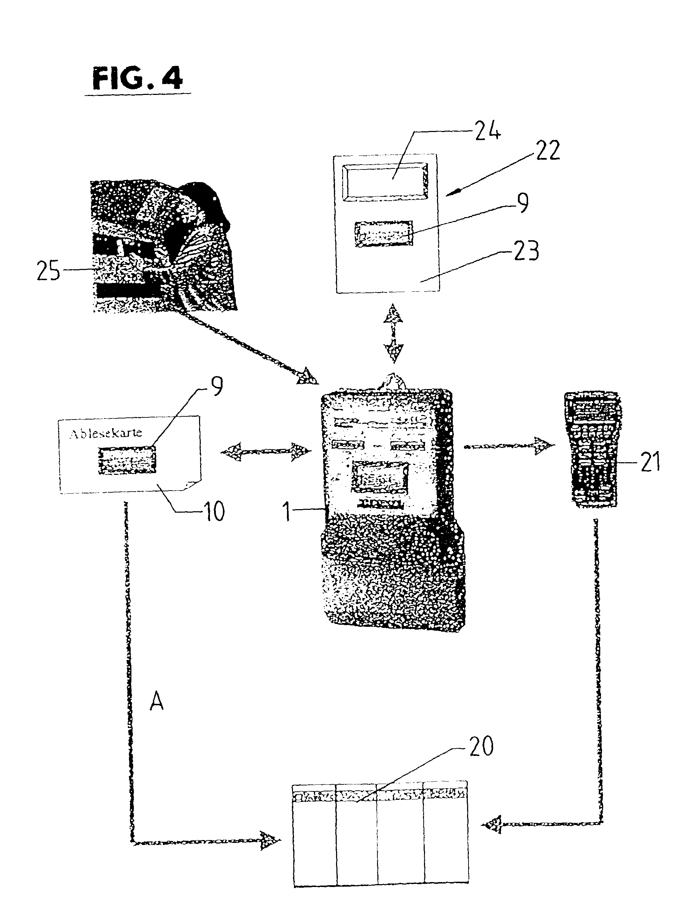

Für die Abrechnung des Verbrauchs wird dann von dem jeweiligen Kunden der Informations- und Datenträger aus der Aufnahme 19 entnommen und beispielsweise mit der normalen Post an die Abrechnungsstelle 20 verschickt, wie dies in der Figur 4 dargestellt ist. In der Abrechnungsstelle 20 werden mit einem geeigneten Lesegerät die Daten aus dem Informations- und Datenträger 9 in ein Rechnersystem eingelesen, und zwar u.a. zur Erstellung der Rechnung. Vom Kunden wird in die Aufnahme 19 ein neuer Informations- und Datenträger 9 eingesetzt.

Grundsätzlich besteht auch die Möglichkeit, den Informations- und Datenträger auf andere Weise am Gehäuse 2 außen zu befestigen, beispielsweise durch eine selbstklebende Schicht, durch eine an dem Zählergehäuse gehaltenen und von einer Folie gebildeten Tasche usw.

Selbstverständlich bleiben alle erforderlichen Daten, insbesondere auch sämtliche abrechnungsrelevanten Daten im Datenspeicher 6 des Zählers 1 gespeichert und können auch jederzeit an der Anzeige 7 abgelesen werden. Insofern bietet der Verbrauchszähler 1 weiterhin die Möglichkeit zu einer herkömmlichen Zählerablesung, beispielsweise durch manuelles Ablesen und Eingeben der Zählerdaten und i insbesondere der abrechnungsrelevanten Daten in ein mobiles Datenerfassungsgerät 21.

Mit 22 ist in der Figur 4 noch ein Lesegerät bezeichnet, welches getrennt vom Verbrauchszähler 1 beim jeweiligen Kunden vorgesehen ist und mit dem der Kunde zumindest die abrechnungsrelevanten Daten des Informations- und Datenträgers 9 lesen kann, z.B. bevor er diesen Informations- und Datenträger an die Abrechnungsstelle 20 versendet. Das Lesegerät 22 weist hierfür in einem Gehäuse eine Leseeinheit auf, mit der die Daten des Informations- und Datenträgers 9 drahtlos gelesen und an einer Anzeige 23 (Display) angezeigt werden können. Der Benutzer legt hierfür den Informations- und Datenträger lediglich auf die Außenfläche des Gehäuses 23 auf.

Das beschriebene System hat erhebliche Vorteile, die sich u. a., wie folgt, zusammenfassen lassen:
1. Der Informations- und Datenträger 9 steht kontaktlos mit dem Zähler in Verbindung. Es sind insbesondere keine Öffnungen, Einschübe, Anschlüsse, Schnittstellen usw. für den Datentransfer erforderlich, speziell auch keine Anschlüsse, Schnittstellen usw., über die von außen her eine Manipulation des Verbrauchszählers möglich wäre.
2. Der bisher übliche Aufbau eines Verbrauchszählers mit der Unterbringung der Komponenten, die zum Messen des Verbrauchs, zur Speicherung der Verbrauchswerte und zum Anzeigen der Verbrauchswerte dienen, in einem nach außen hin hermetisch abgeschlossenen, plombierten eichpflichtigen Raum bleibt voll erhalten. In diesem Raum ist lediglich als zusätzliche Komponente die Schreibund Leseeinheit 8 untergebracht.
3. Die Ablesung des jeweiligen Verbrauchszählers kann durch einfachen Austausch des Informations- und Datenträgers 9 und durch Versenden dieses Trägers an die Abrechnungsstelle 20 erfolgen. Übertragungs- und Ablesefehler sind hierbei ausgeschlossen.
4. Die Datenübertragung von dem jeweiligen Informations- und Datenträger 9 in das Abrechnungssystem der Abrechnungsstelle 20 ist mit einfachen Schreib- und Leseeinrichtungen fehlerfrei und ohne großen Zeitaufwand möglich. Insbesondere sind auch Auswertfehler, wie sie bei den derzeit vielfach verwendeten und vom Kunden manuell ausgefüllten Ablesekarten bedingt durch Lesefehler auftreten können, wirksam vermieden.
5. Das System gestattet nach wie vor die übliche Zählerablesung, insbesondere auch mit einem mobilen Datenerfassungsgerät 21. Über das eigene Lesegerät 22 und die am Verbrauchszähler 1 vorgesehene Anzeige 7 hat der jeweilige Kunde eine sichere und vollständige Kontrolle über die Abrechnung des Verbrauchs.

Vorstehend wurde davon ausgegangen, daß der als Elektrizitätszähler ausgebildete Verbrauchszähler 1 ein elektronischer Zähler ist. Selbstverständlich kann dieser Elektrizitätszähler auch zumindest bezüglich des Meßwerks 4 als mechanischer Zähler, nämlich als Ferraris-Zähler ausgebildet sein, und zwar mit einer zugehörigen mechanischen Anzeige (Rollenzählwerk). Die Elektronik 5 wird dann durch von dem Ferraris-Meßwerk erzeugte Impulse angesteuert, deren Anzahl je Zeiteinheit ein Maß für den gemessenen Verbrauch ist. Aus diesen Signalen bildet die Elektronik 5 die Verbrauchswerte bzw. die abrechnungsrelevanten Werte, die im Datenspeicher 6 abgespeichert und in der vorbeschriebenen Weise in vorgegebenen Zeitintervallen von der Schreib- und Leseeinheit 8 an den Informations- und Datenträger übertragen werden.

Vorstehend wurde weiterhin davon ausgegangen, daß der Daten- und Informationsträger 9 ständig am Zähler 1 vorgesehen ist und die Daten auf dem Informations- und Datenträger 9 ständig aktualisiert werden. Grundsätzlich besteht auch die Möglichkeit, den Informations- und Datenträger 9 sowie den Zähler 1 so auszubilden, daß der jeweilige Informations- und Datenträger 9 vom Kunden erst dann, wenn das Ablesen des Zählers erfolgt, an dem Zählergehäuse 2 bzw. in der dortigen Aufnahme 19 angeordnet wird und der Kunde dann, beispielsweise durch Betätigen einer Taste die Übertragung der Zählerdaten, einschließlich der abrechnungsrelevanten Daten aus dem Datenspeicher 6 über die Schreib- und Leseeinheit 8 in den Informations- und Datenträger veranlaßt. Diese Ausführung hat auch den Vorteil, daß die Daten im Informations- und Datenträger so abgespeichert werden können, daß sie danach nicht mehr veränderbar sind und somit Manipulationen an den abgespeicherten Daten nicht möglich sind.

Mit dem Informations- und Datenträger 9 sind auch andere Systeme und Anwendungen möglich. So kann beispielsweise mit diesem Datenträger in besonders einfacher Weise ein Vorauszahlungssystem aufgebaut werden. Bei diesem System dient der Informations- und Datenträger 9 dann nicht zur Abrechnung und Übermittlung abrechnungsrelevanter Daten von dem Verbrauchszähler 1 an die Abrechnungsstelle 20, sondern als Zahlkarte. Der jeweilige Kunde hat die Möglichkeit, mit dem Informations- und Datenträger 9, der in diesem Fall ähnlich einer Scheckoder Telefonkarte ausgebildet ist, an öffentlich zugänglichen Automaten 25, die z. B. bei Geldinstituten aufgestellt sind, einen bestimmten Geldbetrag oder eine bestimmte Menge Energie zu kaufen, die hierbei auf dem Informations- und Datenträger als Guthaben abgespeichert wird.

Der Informations- und Datenträger 9 wird dann in der beschriebenen Weise an der Außenfläche des Gehäuses 2 des Verbrauchszählers 1 angebracht. Mit dem Verbrauch, beispielsweise an elektrischer Energie wird das auf dem Informations- und Datenträger gespeicherte Guthaben zunehmend abgebaut. Solange sich der Informations- und Datenträger 9 am Zähler befindet und auf diesem Träger noch ein Guthaben vorhanden ist, wird über eine von dem Verbrauchszähler 1 gesteuerte Schalteinrichtung die Abnahmestelle, an der die Leistung entnommen wird, an das Versorgungsnetz geschaltet. Sobald das Guthaben auf dem Informations- und Datenträger aufgebraucht ist, wird die Abnahmestelle vom Versorgungsnetz genommen und der Benutzer aufgefordert, einen neuen geladenen, d. h. mit einem ausreichenden Guthaben versehenen Informations- und Datenträger 9 am Gehäuse 2 anzubringen.

Vorstehend wurden Anwendungen beschrieben, bei denen der jeweilige Informationsund Datenträger 9 mit dem Verbrauchszähler 1 zusammengebracht und von diesem wieder entfernt werden kann. Es sind aber auch Anwendungen denkbar, bei denen ein dem Informations- und Datenträger 9 entsprechender Datenträger 26 in Form eines RFID-Labels fest am Verbrauchszähler, beispielsweise durch Aufkleben oder auf andere geeignete Weise z.B. an der Außenfläche des Gehäuses 2 vorzusehen ist, und zwar zusätzlich zu dem üblichen Typenschild des Zählers 1. Dieser Datenträger 26 weist dann grundsätzlich den gleichen Aufbau wie der Datenträger 9 auf. In dem Speicher des Datenträgers sind die reinen Zählerkenndaten, wie z. B. Zählernummer, Zählertyp, Hersteller, Herstellungszeitpunkt des Zählers, Nennstrom und Nennspannung usw. gespeichert.

Der Datenträger 26 ermöglicht ein vereinfachtes Handling des Zählers 1 bei der Herstellung, Prüfung und/oder Lagerung sowie auch beim Einbau im Netz. Mit Hilfe einer Leseeinrichtung können die auf dem Datenträger 26 gespeicherten Daten problemlos ausgelesen werden, und zwar ohne daß bei diesem Lesen eine vorgegebene Position des jeweiligen Zählers 1 zu einem Lesegerät oder Lesekopf genau eingehalten werden muß, wie dies bei anderen Lesegeräten, z. B. Scannern oder kameragestützten Lesegeräten notwendig ist.

Bei der Prüfung der Verbrauchszähler nach ihrer Herstellung können die für die Prüfung relevanten Daten der Verbrauchszähler 1 nach der Anordnung dieser Zähler auf einer Prüfvorrichtung in einfacher Weise für die Vorbereitung und Auswertung der Prüfung sowie für ein Prüfprotokoll ausgelesen werden.

Bei der Lagerung der Zähler können die aus dem jeweiligen Datenträger 26 ausgelesenen Daten beispielsweise in der Lagerverwaltung und Lagerorganisation verwendet werden, beispielsweise zur Registrierung des Lagerplatzes des jeweiligen Zählers, zur Verwaltung des Lagerbestandes usw.

Beim Einbau des Verbrauchszählers 1 in ein Netz können die Daten des Datenträgers 26 beispielsweise dadurch verwendet werden, daß sie mit einem geeigneten mobilen Lesegerät ausgelesen werden, in welches dann beim Einbau zu den Zählerdaten auch der Einbauort eingegeben und abgespeichert wird, so daß die Zählerdaten zusammen mit dem Einbauort und/oder der Kundennummer in einem Rechnersystem des Versorgungsunternehmens bzw. der Abrechnungsstelle hinterlegt werden können.

Die Erfindung wurde voranstehend an Ausführungsbeispielen beschrieben. Es versteht sich, daß zahlreiche weitere Änderungen sowie Abwandlungen möglich sind, ohne daß dadurch der der Erfindung zugrundeliegende Erfindungsgedanke verlassen wird.

### Bezugszeichenliste

- 1: Verbrauchszähler
- 2: Zählergehäuse
- 3: Zählerinnenraum
- 4: Meßwerk
- 5: Elektronik
- 6: Datenspeicher
- 7: Anzeige
- 8: Schreib- und Leseeinheit
- 9: Datenträger (Radio Frequenz Identification Label)
- 10: Träger aus Flachmaterial
- 11: Antennenstruktur
- 12: Halbleiterchip
- 13: Steuer- und Auswertschaltung
- 14: Speicher
- 15: Spannungsversorgung
- 16: Speicher
- 17: Adressenblock
- 18: Absenderblock
- 19: Aufnahme
- 20: Abrechnungsstelle
- 21: mobiles Datenerfassungsgerät
- 22: Lesegerät
- 23: Gehäuse
- 24: Anzeige
- 25: Zahl- oder Ladeautomat
- 26: Datenträger

## Patentansprüche

1. Zähleranordnung zur Verbrauchsmessung, mit einem Verbrauchszähler (1) mit Zählergehäuse (2), in dessen Innenraum (3) zumindest eine Meßeinrichtung (4) sowie Mittel zur Speicherung (6) von Verbrauchswerten untergebracht sind, sowie mit einem Daten- oder Informationsträger (9, 26), **dadurch gekennzeichnet, daß** der Daten- und Informationsträger (9, 26) ein RFID-Label ist.

2. Zähleranordnung nach Anspruch 1, **dadurch gekennzeichnet, daß** der Daten- und Informationsträger (9, 26) an der von dem Gehäuseinnenraum (3) getrennten Außenseite des Gehäuses (2) vorgesehen ist.

3. Zähleranordnung nach Anspruch 1 oder 2, **dadurch gekennzeichnet, daß** der Datenund Informationsträger (26) fest am Gehäuse (2), beispielsweise an der Außenfläche des Gehäuses (2) vorgesehen ist.

4. Zähleranordnung nach einem der vorhergehenden Ansprüche, **dadurch gekennzeichnet, daß** der Informations- und Datenträger (26) ein kontaktloses, elektronisch lesbares Typenschild bildet, welches die vorzugsweise nicht veränderbaren Zählerdaten aufweist.

5. Zähleranordnung nach einem der vorhergehenden Ansprüche, **dadurch gekennzeichnet, daß** der Datenträger (9) lösbar oder entfernbar außerhalb des Gehäuseinnenraumes (3) vorgesehen ist, und zwar beispielsweise an der Außenseite des Zählergehäuses (2),
wobei beispielsweise eine Aufnahme (19) an der Außenseite des Zählergehäuses (2) zur wieder entnehmbaren Anordnung des Datenträgers (9) vorgesehen ist, und/oder
wobei beispielsweise der Datenträger (9) durch Kleben wieder lösbar an dem Zählergehäuse (2) befestigt ist.

6. Zähleranordnung nach einem der vorhergehenden Ansprüche, **dadurch gekennzeichnet, daß** der Datenträger flach bzw. kartenartig ausgebildet ist.

7. Zähleranordnung nach einem der vorhergehenden Ansprüche, **dadurch gekennzeichnet, daß** der Datenträger (9) in Form einer Post- oder Briefkarte ausgebildet ist.

8. Zähleranordnung nach einem der vorhergehenden Ansprüche, **dadurch gekennzeichnet, daß** im Zählergehäuse (2), vorzugsweise in dem die Meßeinrichtung (4) aufnehmenden Innenraum (3) eine Schreibeinheit, vorzugsweise eine Schreib- und Leseeinheit (8) vorgesehen ist, und zwar für eine drahtlose Übertragung von Zählerdaten und/oder Verbrauchsdaten an den Datenträger (9) und/oder für einen bidirektionalen Datentransfer zwischen dem Zähler (1) und dem Datenträger.

9. Zähleranordnung nach einem der vorhergehenden Ansprüche, **gekennzeichnet durch** ein von dem Zähler (1) getrenntes Lesegerät (22) zum Lesen der Daten des Datenträgers (9).

10. Zähleranordnung nach einem der vorhergehenden Ansprüche, **dadurch gekennzeichnet, daß** der Datenträger (9) als vorzugsweise wieder ladbare Zahlkarte ausgebildet ist, und daß im Zähler (1) eine Schreib- und Leseeinheit (8) für einen beispielsweise bidirektionalen Datentransfer zwischen dem Zähler (1) und dem Datenträger (9) vorgesehen ist, um von einem Guthaben des Datenträgers (9) Werte abzubuchen, die dem vom Zähler gemessenen und an einer Entnahmestelle entnommenen Verbrauch entsprechen, und daß im Zähler Mittel vorgesehen sind, die ein Zuschalten einer Entnahmestelle bei ausreichendem Guthaben an ein Netz sowie ein Wegschalten der Abnahmestelle vom Netz bei aufgebrauchtem Guthaben veranlassen.
